# EUROPÄISCHE PATENTSCHRIFT

(11) **EP 0 945 556 B1**
(45) Veröffentlichungstag und Bekanntmachung des Hinweises auf die Patenterteilung: **14.01.2004**
(21) Anmeldenummer: 99104206.0
(22) Anmeldetag: 02.03.1999
(51) Int. Cl.: E02F 9/12, B66C 23/94

(54) **Drehkranzbremse**
Brake designed for a rotating rim
Frein de couronne tournante

(30) Priorität: 26.03.1998 DE 19813521
(43) Veröffentlichungstag der Anmeldung: 29.09.1999
(73) Patentinhaber: BAUER Maschinen GmbH, 86529 Schrobenhausen (DE)
(72) Erfinder: Bauer, Sebastian Dr., 81667 München (DE); Harthauser, Werner, 86637 Wertingen (DE)
(74) Vertreter: Wunderlich, Rainer, Dipl.-Ing.

(56) Entgegenhaltungen:
- DE-A- 2 208 763
- FR-A- 2 126 958
- US-A- 3 819 018
- US-A- 3 861 243

## Beschreibung

Die Erfindung betrifft eine Drehkranzbremse, welche insbesondere für Erdbaumaschinen vorgesehen ist.

Beispielsweise bei einem Bagger sind ein Unterwagen und ein darauf drehbar gelagerter Oberwagen angeordnet. An dem Unterwagen ist ein Drehkranz befestigt, welcher an seinem äußeren Umfang eine Verzahnung aufweist. In diese Verzahnung greifen am Oberwagen befestigte Zahnräder ein, welche zum Verdrehen des Oberwagens gegenüber dem feststehenden Unterwagen von einem Antrieb, beispielsweise Hydraulikmotoren, in Rotation versetzt werden. Zur Drehung des Oberwagens gegenüber dem Unterwagen müssen lediglich die Massenträgheit- und Reibungsmomente durch den Antrieb überwunden werden. Ein Drehen des Oberwagens ist deshalb relativ leicht möglich.

Ist beispielsweise an dem Oberwagen ein Drehbohrgerät zum Einbringen einer Bohrung in den Boden befestigt, so kann im Bohrbetrieb ein relativ großes Drehmoment auf den Oberwagen einwirken. Dieses Bohrdrehmoment kann zu einer unerwünschten Verdrehung des Oberwagens gegen den Unterwagen führen, was eine erhebliche Beeinträchtigung des Bohrbetriebes darstellt.

Aus der DE 22 08 763 A ist eine Vorrichtung zum Arretieren eines drehbaren Oberwagens mit dem Unterwagen eines Baggers bekannt, bei dem der Oberwagen durch ein auf diesem angeordnetes Antriebsaggregat mit Schwenkbremse bewegbar und in seiner Bewegung abbremsbar ist. Die Vorrichtung weist einen Hebel auf, der in außenliegende Kühlrippen einer Schwenkbremstrommel der Schwenkbremse zum Arretieren in Eingriff gebracht werden kann.

Der Erfindung liegt die **Aufgabe** zugrunde, zwischen einem mit einem Drehkranz versehenen Teil, insbesondere einem Unterwagen, und einem dem gegenüber drehbar gelagerten Teil, insbesondere einem Oberwagen, eine unerwünschte Verdrehbewegung zuverlässig zu verhindern.

Die Aufgabe wird erfindungsgemäß durch eine Drehkranzbremse mit den Merkmalen des Anspruchs 1 gelöst.

Eine erfindungsgemäße Drehkranzbremse umfaßt einen Drehkranz, der eine Verzahnung aufweist, einen Träger, der relativ zu dem Drehkranz drehbar gelagert ist, und einen Bremsklotz, der an dem Träger zwischen einer Bremsposition und einer Freilaufposition verschiebbar gelagert ist, wobei der Bremsklotz in der Bremsposition in die Verzahnung an dem Drehkranz eingreift und eine Drehbewegung zwischen dem Drehkranz und dem Träger blockiert ist, während der Bremsklotz in der Freilaufposition von dem Drehkranz beabstandet ist, und wobei der Bremsklotz mehrere Zähne aufweist, welche zum Eingreifen in die Verzahnung ausgebildet sind.

In der Bremsposition greift der Bremsklotz in die Verzahnung des Drehkranzes ein, wobei durch diese Verkeilung eine Drehbewegung zwischen dem Träger und dem Drehkranz blokkiert ist. Der Bremsklotz kann dabei radial oder axial in die Verzahnung am Drehkranz eingeschoben werden. Die Verzahnung ist üblicherweise als eine Außenverzahnung ausgeführt, wobei jedoch grundsätzlich auch eine Innenverzahnung an dem ringförmigen Drehkranz möglich ist.

Um eine hohe Beanspruchung eines einzelnen Zahnes am Drehkranz zu vermeiden, ist es erfindungsgemäß vorgesehen, daß der Bremsklotz mehrere Zähne aufweist, welche zum Eingreifen in die Verzahnung ausgebildet sind. Der Bremsklotz ist dabei mit einem Verzahnungsabschnitt ausgebildet, welcher korrespondierend zur Verzahnung am Drehkranz gefromt ist. Zur weiteren Entlastung einzelner Zähne können auch mehrere Bremsklötze vorgesehen sein, welche gleichzeitig mit dem Drehkranz in Eingriff gelangen.

Es ist grundsätzlich möglich, daß der Bremsklotz von Hand, beispielsweise mittels einer Schraubspindel, betätigt werden kann. Eine bevorzugte Ausführungsform der Erfindung besteht darin, daß eine energiebetriebene Antriebseinheit vorgesehen ist, mit welcher der Bremsklotz verschiebbar ist. Für eine lineare Verstellung des Bremsklotzes kann ein Elekromotor mit einer Schraubspindel oder eine Kugelumlaufspindel eingesetzt werden. Als eine einfache Antriebseinheit kann auch ein Druckzylinder eingesetzt werden, dessen Hubkolben unmittelbar mit dem Bremsklotz verbunden ist, um diesen zwischen den beiden Positionen zu verschieben.

Die Erfindung ist in vorteilhafter Weise dadurch weitergebildet, daß die Antriebseinheit mindestens einen Druckzylinder und eine Übertragungseinrichtung aufweist, daß eine durch den Druckzylinder erzeugte Hubbewegung etwa tangential zum Drehkranz gerichtet ist und daß durch die Übertragungseinrichtung die Hubbewegung des Druckzylinders auf den Bremsklotz in eine Verschieberichtung übersetzt ist, welche etwa radial zum Drehkranz gerichtet ist. Mit der Anordnung der Verstellrichtung des Bremsklotzes in einem Winkel von ca 90° zur Hubbewegung des Druckzylinders wird ein sehr robuster Aufbau erreicht, durch welchen selbst bei hohen Drehmomenten eine zuverlässige Blockierung gewährleistet ist.

Für einen robusten Aufbau ist es erfindungsgemäß, daß die Übertragungseinrichtung zum Verstellen des Bremsklotzes einen Kniehebelmechanismus aufweist.

Eine alternative Ausführungsform hierzu besteht nach der Erfindung darin, daß die Übertragungseinrichtung einen Keilschiebermechanismus aufweist. Da bei einem Keilschiebermechanismus keine Drehbolzen oder Drehlager vorgesehen werden müssen, können bei einem einfachen Aufbau sehr hohe Kräfte aufgebracht werden.

Bei einer weiteren Ausführungsform der Erfindung ist es bevorzugt, daß eine Meßeinrichtung zum Ermitteln einer Drehbewegung zwischen dem Drehkranz und dem Träger vorgesehen ist und daß die Meßeinrichtung mit einer Steuereinheit in Verbindung steht, durch welche bei Vorliegen einer Drehbewegung eine Verschiebung des Bremsklotzes in die Bremsposition verhinderbar ist. Hierdurch wird sichergestellt, daß die Bremse nicht betätigt wird, während noch eine Drehbewegung stattfindet und so die Verzahnung des Drehkranzes beschädigt werden könnte.

Grundsätzlich kann die Meßeinrichtung zur Überwachung einer Drehbewegung, insbesondere einer Oberwagendrehung, an jeder geeigneten Stelle eines Antriebsstranges des Drehantriebes vorgesehen sein. Die Meßeinrichtung kann beispielsweise an dem Antriebsmotor, an dem Getriebe oder an Übertragungswellen angeordnet werden.

Es ist erfindungsgemäß jedoch von Vorteil, daß die Meßeinrichtung ein drehbares Meßzahnrad umfaßt, welches mit der Verzahnung des Drehkranzes in kämmender Verbindung steht, und daß ein Sensor zum Bestimmen einer Drehung des Meßrades vorgesehen ist. Hierdurch wird eine insgesamt kompakte Anordnung erreicht, wobei der relativ empfindliche Sensor vom Drehkranz beabstandet an einer geschützten Position untergebracht werden kann. Als Sensor kann insbesondere ein Inkrementalgeber verwendet werden, welcher beispielsweise beim Vorbeilauf der einzelnen Zähne des Meßrades oder einer separaten Meßscheibe einen Impuls als Maß für die Drehung abgeben kann.

Erfindungsgemäß ist die Drehkranzbremse insbesondere an einer Erdbaumaschine angeordnet, wobei ein Unterwagen und ein dazu drehbar gelagerter Oberwagen vorgesehen sind, an denen einerseits der Drehkranz und andererseits der Träger der Drehkranzbremse angebracht sind. An dem Oberwagen kann so ein Bohrgerät angeordnet und betrieben werden, ohne daß im Betrieb eine unerwünschte Verdrehung gegenüber dem Unterwagen auftritt.

Die Erfindung wird weiter anhand von bevorzugten Ausführungsbeispielen erläutert, welche schematisch in den Zeichnungen dargestellt sind. In den Zeichnungen zeigen:
- Fig. 1: eine Draufsicht einer erfindungsgemäßen Drehkranzbremse mit einem direkt angetriebenen Bremsklotz;
- Fig. 2: eine Draufsicht einer weiteren erfindungsgemäßen Drehkranzbremse mit einem Keilschiebermechanismus;
- Fig. 3: eine Draufsicht auf eine andere erfindungsgemäße Drehkranzbremse mit einem Kniehebelmechanismus und
- Fig. 4: eine Draufsicht einer weiteren erfindungsgemäßen Drehkranzbremse mit einem Kniehebelmechanismus und einem Federrückzug.

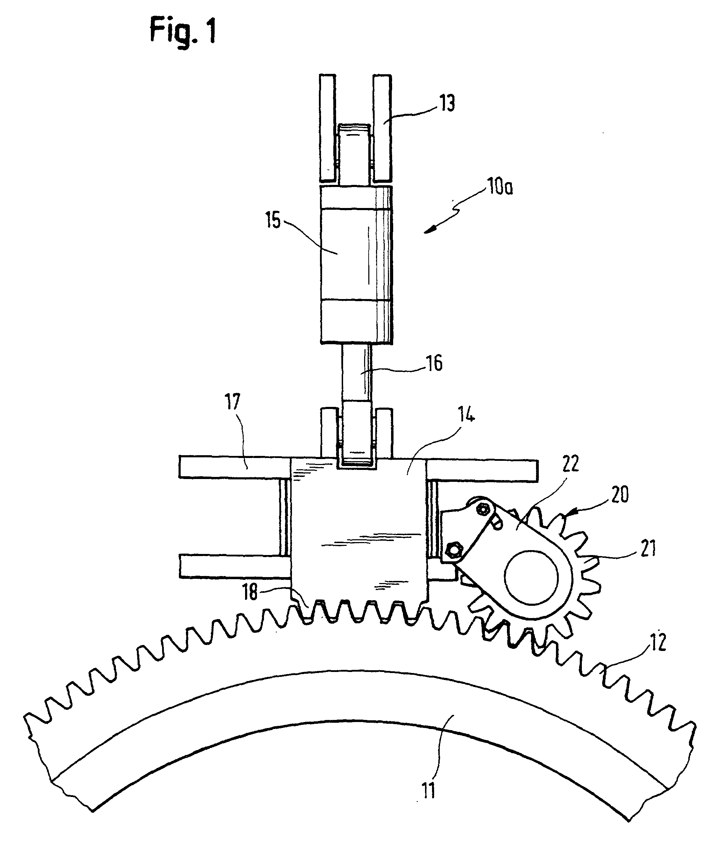

In Fig. 1 ist eine erfindungsgemäße Drehkranzbremse 10a zu ersehen, bei welcher ein Drehkranz 11 mit einer Verzahnung 12 nur ausschnittsweise dargestellt ist. In die Verzahnung 12 greift ein Bremsklotz 14 mit entsprechend ausgebildeten Zähnen 18 ein, so daß eine Verdrehung zwischen dem Drehkranz 11 und dem Bremsklotz 14 verhindert wird.

Der Bremsklotz 14 ist an einem nur teilweise dargestellten Träger 13 verschiebbar angeordnet, welcher gegenüber dem Drehkranz 11 drehbar gelagert ist. Eine Linearführung 17 ist durch an dem Träger 13 befestigte Platten gebildet. Zur Verschiebung des Bremsklotzes 14 ist ein Druckzylinder 15 vorgesehen, welcher einerseits an dem Träger 13 angebracht und andererseits über seine Kolbenstange 16 mit dem Bremsklotz 14 verbunden ist. Der Druckzylinder 15 kann hydraulisch oder pneumatisch betrieben sein.

Durch Ausfahren der Kolbenstange 16 wird der Bremsklotz 14 in eine Bremsposition bewegt, welche in Fig. 1 dargestellt ist. In dieser Bremsposition greifen die Zähne 18 des Bremsklotzes 14 in die Verzahnung 12 des Drehkranzes 11 ein. Durch Einfahren der Kolbenstange 16 wird der Bremsklotz entlang der Führung 17 in einer radialen Richtung linear zurückbewegt, wobei die Zähne 18 des Bremsklotzes 14 ausserhalb des Eingriffbereiches der Verzahnung 12 gelangen. In dieser Freilaufposition ist eine freie Verdrehung des Trägers 13 relativ zu dem Drehkranz 11 möglich.

Zur Messung einer Drehbewegung zwischen dem Träger 13 und dem Drehkranz 11 ist an dem Träger 13 eine Meßeinrichtung 20 vorgesehen. Diese umfaßt ein Meßzahnrad 21, welches drehbar an einem Halter 22 gelagert ist. Der Halter 22 ist wiederum an dem Träger 13 befestigt. Eine Drehung des Meßzahnrades 21 kann durch einen nicht dargestellten Sensor erfaßt werden, welcher mit einer Steuereinheit in Verbindung steht. Diese Steuereinheit kann das Ausfahren der Kolbenstange 16 des Druckzylinders 15 sperren, falls noch eine Relativbewegung zwischen dem Drehkranz 11 und dem Träger 13 und somit eine entsprechende Drehung des Meßrades 21 vorliegen sollte.

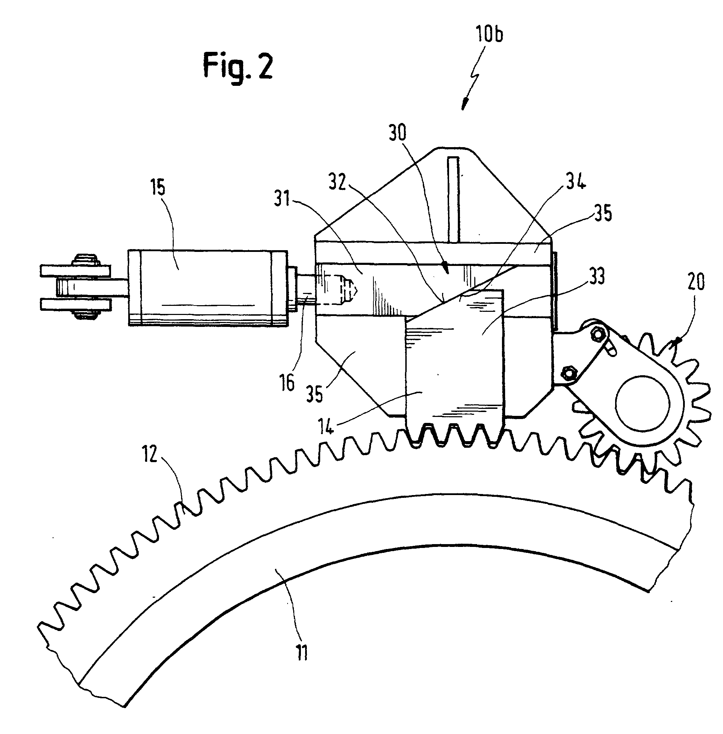

Aus Fig. 2 geht eine weitere erfindungsgemäße Drehkranzbremse 10b hervor, deren Aufbau im wesentlichen der Drehkranzbremse 10a von Fig. 1 entspricht. Bauteile mit entsprechender Funktion der nachfolgenden Ausführungsformen sind mit den gleichen Bezugszeichen versehen und werden nicht weiter erläutert. In Abwandlung von der zuvor beschriebenen Drehkranzbremse 10a ist zwischen einem Druckzylinder 15 und einem Bremsklotz 14 ein Keilschiebermechanismus 30 zwischengeschaltet. Hierzu ist an einer Kolbenstange 16 des Druckzylinders 15 ein erster Keil 31 mit einer ersten Keilfläche 32 vorgesehen, welche zu einer Längsachse des Druckzylinders 15 einen Winkel von etwa 60° aufweist. Die erste Keilfläche 32 liegt gleitend an einer zweiten Keilfläche 34 eines zweiten Keiles 32 an, welcher an dem Bremsklotz 14 ausgebildet ist. Die zweite Keilfläche 34 steht in einem Winkel von ca. 30° zur Verschieberichtung des Bremsklotzes 14.

Die Hubbewegung der Kolbenstange 16 des Druckzylinders 15 verläuft in einer tangentialen Richtung zu dem ringförmigen Drehkranz 11. Bei Ausfahren der Kolbenstange 16 aus dem Druckzylinder 15 wird aufgrund der Keilflächen 32, 34 der Bremsklotz 14 in einer radialen Richtung gegen den Drehkranz 11 in eine Bremsposition verschoben. Durch entsprechendes Einfahren der Kolbenstange 16 kann der Bremsklotz 14 beispielsweise unter zusätzlicher Einwirkung einer Rückstellfeder radial von dem Drehkranz 11 entfernt werden, so daß ein Freilauf möglich ist. Zur Sicherstellung einer Linearbewegung der beiden Keile 31, 33 sind entsprechende Führungsflächen 35 mittels Platten an dem Träger 13 ausgebildet.

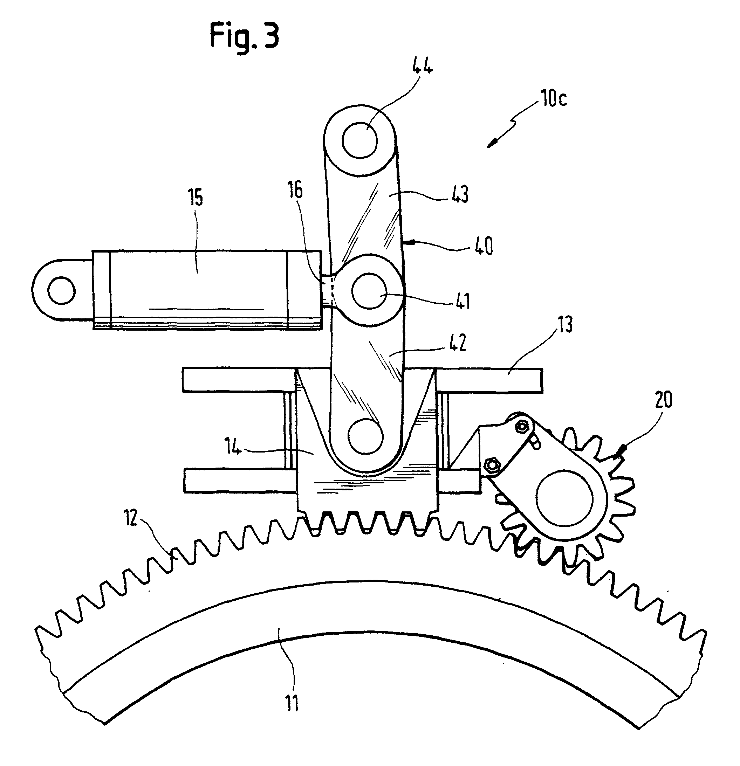

Bei einer weiteren erfindungsgemäßen Drehkranzbremse 10c gemäß Fig. 3 ist anstelle des zuvor beschriebenen Keilschiebermechanismus ein Kniehebelmechanismus 40 angeordnet. An einer Kolbenstange 16 eines Druckzylinders 15 ist ein zur Zeichnungsebene vertikal gerichteter Steuerbolzen 41 angebracht. An dem Steuerbolzen 41 sind schwenkbar ein erster Kniehebel 42 und ein sich im wesentlichen in eine entgegengesetzte Richtung erstreckender zweiter Kniehebel 43 gelagert. Der erste Kniehebel 42 erstreckt sich etwa senkrecht zur Verschieberichtung der Kolbenstange 16 und in einer radialen Richtung zum Drehkranz 11, wobei der erste Kniehebel 42 an dem Bremsklotz 14 angelenkt ist. Der zweite Kniehebel 43 ist mit seinem anderen freien Ende an einem Bolzen 44 gelagert, welcher starr mit dem Träger 13 verbunden ist.

Der Kniehebelmechanismus 40 ist so ausgebildet, daß bei eingezogener Kolbenstange 16 der Bremsklotz 14 radial in die Bremsposition gedrückt ist, während bei Ausfahren der Kolbenstange 16 der Bremsklotz 14 radial von dem Drehkranz 11 beabstandet wird.

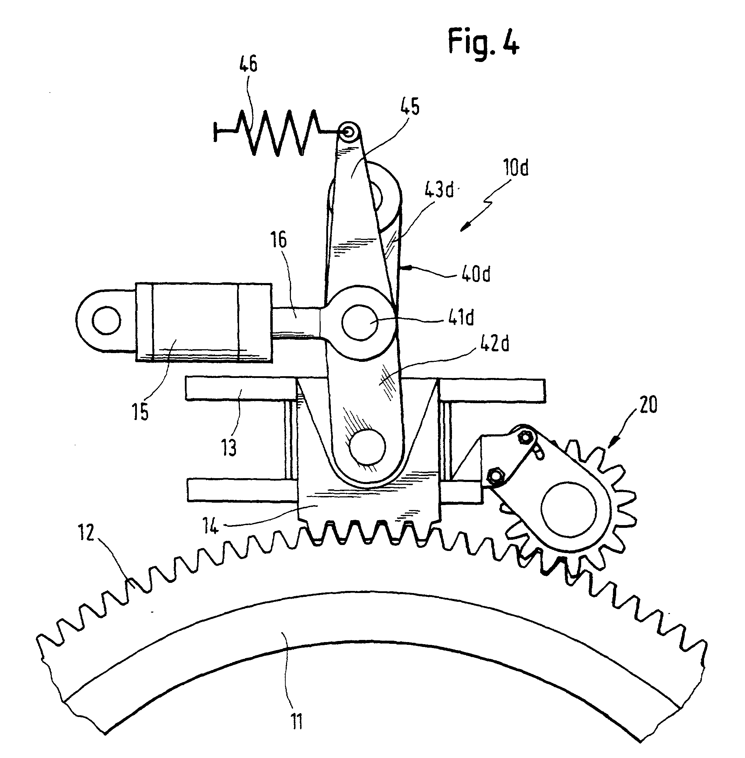

Eine Drehkranzbremse 10d mit einem abgewandelten Kniehebelmechanismus 40d ist in Fig. 4 dargestellt. Der Kniehebelmechanismus 40d mit seinem ersten Kniehebel 42d und seinem zweiten Kniehebel 43d ist so ausgebildet, daß der Bremsklotz 14 bei ausgefahrener Kolbenstange 16 radial in die Bremsposition gedrückt ist. Durch Einfahren der Kolbenstange 16 in den Druckzylinder 15 hingegen wird der Bremsklotz 14 radial von dem Drehkranz 11 beabstandet.

Des weiteren ist der Kniehebelmechanismus 40d der Drehkranzbremse 10d mit einem Rückstellhebel 45 versehen, welcher einerseits an einem Steuerbolzen 41d und andererseits mit einer Federeinrichtung 46 in Verbindung steht. Durch Ausfahren der Kolbenstange 16 wird die Federeinrichtung 46 gespannt, so daß bei Abschalten eines Druckes innerhalb des Druckzylineders 15 die Federeinrichtung 46 über den Rückstellhebel 45 die Kolbenstange 16 zurück in den Druckzylinder 15 schiebt. Dabei wird gleichzeitig der Bremsklotz 14 radial von dem Drehkranz 11 zurückgezogen.

## Patentansprüche

1. Drehkranzbremse mit
- einem Drehkranz (11), der eine Verzahnung (12) aufweist,
- einem Träger (13), der relativ zu dem Drehkranz (11) drehbar gelagert ist, und
- einem Bremsklotz (14), der an dem Träger (13) zwischen einer Bremsposition und einer Freilaufposition verschiebbar gelagert ist,
**dadurch gekennzeichnet,**
- **dass** der Bremsklotz (14) in der Bremsposition in die Verzahnung (12) an dem Drehkranz (11) eingreift und eine Drehbewegung zwischen dem Drehkranz (11) und dem Träger (13) blockiert ist, während der Bremsklotz (14) in der Freilaufposition von dem Drehkranz (11) beabstandet ist, und
- **dass** der Bremsklotz (14) mehrere Zähne (18) aufweist, welche zum Eingreifen in die Verzahnung (12) ausgebildet sind.

2. Drehkranzbremse nach Anspruch 1,
**dadurch gekennzeichnet,**
**dass** eine energiebetriebene Antriebseinheit vorgesehen ist, mit welcher der Bremsklotz (14) verschiebbar ist.

3. Drehkranzbremse nach Anspruch 2,
**dadurch gekennzeichnet,**
**dass** die Antriebseinheit mindestens einen Druckzylinder (15) und eine Übertragungseinrichtung aufweist, dass eine durch den Druckzylinder (15) erzeugte Hubbewegung etwa tangential zu dem Drehkranz (11) gerichtet ist und
**dass** durch die Übertragungseinrichtung die Hubbewegung des Druckzylinders (15) auf den Bremsklotz (14) in eine Verschieberichtung übersetzt ist, welche etwa radial zu dem Drehkranz (11) gerichtet ist.

4. Drehkranzbremse nach einem der Ansprüche 1 bis 3,
**dadurch gekennzeichnet,**
**dass** eine Übertragungseinrichtung zum Verstellen des Bremsklotzes (14) einen Kniehebelmechanismus (40) aufweist.

5. Drehkranzbremse nach einem der Ansprüche 1 bis 3,
**dadurch gekennzeichnet,**
**dass** eine Übertragungseinrichtung zum Verstellen des Bremsklotzes (14) einen Keilschiebermechanismus (30) aufweist.

6. Drehkranzbremse nach einem der Ansprüche 1 bis 5,
**dadurch gekennzeichnet,**
**dass** eine Messeinrichtung (20) zum Ermitteln einer Drehbewegung zwischen dem Drehkranz (11) und dem Träger (13) vorgesehen ist und
**dass** die Messeinrichtung (20) mit einer Steuereinheit in Verbindung steht, durch welche bei Vorliegen einer Drehbewegung eine Verschiebung des Bremsklotzes (14) in die Bremsposition verhinderbar ist.

7. Drehkranzbremse nach Anspruch 6,
**dadurch gekennzeichnet,**
**dass** die Messeinrichtung (20) ein drehbares Messrad (21) umfasst, welches mit der Verzahnung (12) des Drehkranzes (11) in kämmender Verbindung steht, und
**dass** ein Sensor zum Bestimmen einer Drehung des Messrades (21) vorgesehen ist.

8. Erdbaumaschine mit einer Drehkranzbremse nach einem der Ansprüche 1 bis 7,
**dadurch gekennzeichnet,**
**dass** ein Unterwagen und ein dazu drehbar gelagerter Oberwagen vorgesehen sind und
**dass** der Drehkranz (11) einerseits an dem Unterwagen oder dem Oberwagen und andererseits der Träger (13) an dem Oberwagen bzw. dem Unterwagen angebracht ist.

## Claims

1. Slewing ring brake having
- a slewing ring (11), which has a tooth system (12),
- a support (13), mounted in rotary manner relative to the slewing ring (11) and
- a brake block (14), which is displaceably mounted on the support (13) between a braking position and a freewheeling position,
**characterized in that**
- in the braking position, the brake block (14) engages with the tooth system (12) on the slewing ring (11) and a rotary movement between the slewing ring (11) and the support (13) is blocked, whereas in the freewheeling position, the brake block (14) is spaced from the slewing ring (11), and
- that the brake block (14) has several teeth (18) constructed for meshing with the tooth system (12).

2. Slewing ring brake according to claim 1,
**characterized in that**
a power operated driving unit is provided, with which the brake block (14) is displaceable.

3. Slewing ring brake according to claim 2,
**characterized in that**
the driving unit has at least one pressure cylinder (15) and a transmission device,
that a lift movement produced by the pressure cylinder (15) is directed roughly tangentially to the slewing ring (11) and
that by the transmission device, the lift movement of the pressure cylinder (15) is transformed on the brake block (14) into a displacement direction directed roughly radially to the slewing ring (11).

4. Slewing ring brake according to one of the claims 1 to 3,
**characterized in that**
a transmission device for the displacement of the brake block (14) has a toggle lever mechanism (40).

5. Slewing ring brake according to one of the claims 1 to 3,
**characterized in that**
a transmission device for displacing the brake block (14) has a wedge-type sliding mechanism (30).

6. Slewing ring brake according to one of the claims 1 to 5,
**characterized in that**
a measuring device (20) is provided for detecting a rotary movement between the slewing ring (11) and the support (13) and
that the measuring device (20) is connected to a control unit making it possible to prevent a displacement of the brake block (14) into the braking position in the presence of a rotary movement.

7. Slewing ring brake according to claim 6,
**characterized in that**
the measuring device (20) incorporates a rotary measuring gear (21), which meshes with the tooth system (12) of the slewing ring (11) and that a sensor for establishing a rotation of the measuring gear (21) is provided.

8. Earthworking machinery having a slewing ring brake according to one of the claims 1 to 7,
**characterized in that**
a lower chassis and an upper chassis mounted in rotary manner relative thereto are provided and
that the slewing ring (11) on the one hand is installed on the lower chassis or the upper chassis and the support (13) on the other hand is mounted on the upper chassis or lower chassis, respectively.

## Revendications

1. Frein à couronne rotative, avec
- une couronne rotative (11) qui présente une denture (12),
- un support (13) qui est monté rotatif par rapport à la couronne rotative ( 11 ), et
- un sabot de freinage (14) qui est monté mobile sur le support (13) entre une position de freinage et une position de roulement libre,
***caractérisé***
***en ce que****,* dans la position de freinage, le sabot de freinage (14) s'engage dans la denture (12) présente sur la couronne dentée (11) et un mouvement de rotation entre la couronne dentée (11) et le support (13) est bloqué, tandis que dans la position de roulement libre, le sabot de freinage (14) est distant de la couronne dentée (11), et
***en ce que*** le sabot de freinage (14) présente plusieurs dents (18) qui sont conformées pour s'engager dans la denture (12).

2. Frein à couronne rotative selon la revendication 1, ***caractérisé en ce qu'***une unité d'entraînement alimentée en énergie est prévue, avec laquelle le sabot de freinage (14) peut être déplacé.

3. Frein à couronne rotative selon la revendication 2, ***caractérisé***
***en ce que*** l'unité d'entraînement présente au moins un cylindre de pression (15) et un dispositif de transmission,
***en ce qu'***un mouvement de course produit par le cylindre de pression (15) est dirigé approximativement de façon tangentielle à la couronne rotative (11), et
***en ce que*** du fait du dispositif de transmission, le mouvement de course du cylindre de pression (15) est transmis au sabot de freinage (14) dans une direction de déplacement qui est orientée approximativement de façon radiale par rapport à la couronne rotative (11).

4. Frein à couronne rotative selon l'une quelconque des revendications 1 à 3, ***caractérisé en ce qu'***un dispositif de transmission destiné à déplacer le sabot de freinage (14) présente un mécanisme (40) à genouillère.

5. Frein à couronne rotative selon l'une quelconque des revendications 1 à 3, ***caractérisé en ce qu'***un dispositif de transmission destiné à déplacer le sabot de freinage (14) présente un mécanisme (30) à coulisseau oblique.

6. Frein à couronne rotative selon l'une quelconque des revendications 1 à 5, ***caractérisé***
***en ce qu'***un dispositif de mesure (20) est prévu pour déterminer un mouvement de rotation entre la couronne rotative (11) et le support (13), et
***en ce que*** le dispositif de mesure (20) est en liaison avec une unité de commande grâce à laquelle, en présence d'un mouvement de rotation, un déplacement du sabot de freinage (14) vers la position de freinage peut être empêché.

7. Frein à couronne rotative selon la revendication 6, ***caractérisé en ce que*** le dispositif de mesure (20) comprend une roue de mesure rotative (21) qui est en liaison d'engrènement avec la denture (12) de la couronne rotative (11), *et **en ce qu'***un capteur est prévu pour déterminer une rotation de la roue de mesure (21).

8. Machine de terrassement avec un frein à couronne rotative selon l'une quelconque des revendications 1 à 7, ***caractérisée***
***en ce qu'***il est prévu un train et un châssis tournant monté rotatif par rapport à celui-ci, et
***en ce que*** d'une part la couronne rotative (11) est placée sur le train ou sur le châssis tournant et d'autre part le support (13) est placé sur le châssis tournant ou sur le train.
